# EUROPEAN PATENT APPLICATION

(11) **EP 3 863 292 A1**
(43) Date of publication of application: **11.08.2021**
(21) Application number: 19888388.6
(22) Date of filing: 22.11.2019
(51) Int. Cl.: H04N 21/433

(54) **METHOD AND DEVICE FOR COURSEWARE RECORDING AND PLAYBACK, SMART INTERACTIVE TABLET, AND STORAGE MEDIUM**

(30) Priority: 29.11.2018 CN 201811440867
(71) Applicant: Guangzhou Shiyuan Electronics Co., Ltd., Guangzhou, Guangdong 510530 (CN); Guangzhou Shirui Electronics Co., Ltd., Guangzhou, Guangdong 510663 (CN)
(72) Inventor: LING, Jianghua, Guangzhou, Guangdong 510530 (CN)
(74) Representative: Grünecker Patent- und Rechtsanwälte PartG mbB
(86) International application number: PCT/CN2019/120273
(87) International publication number: WO 2020/108402

(57) **Abstract**

The present disclosure includes a method and device for recording and transmitting courseware, an interactive white board and a storage medium, where the recording method includes recording a page identifier of the courseware, user audio data and user behavior data in the recording process; responsive to receiving an instruction for triggering the closing of the courseware recording function, mapping time points of recording the recorded page identifier of the courseware, user audio data and user behavior data to a timeline of the recording process, and based on the timeline, storing the courseware, the user audio data and the user behavior data in relation each other to generate a recording file of the recording process. The courseware page shows a movable element; the user behavior data includes an user instruction, start time and duration of the user instruction, an identifier of an element pointed to by the user instruction, and data stream generated in the acting process of the user instruction; the user instruction includes a drag instruction for triggering a motion of the movable element. Therefore, the cost of recording and transmitting a courseware is reduced.

## Description

The disclosure claims the priority of a Chinese patent application with the Application No. 201811440867.3, which is filed to CNIPA on November 29, 2018, and the entire contents of the above application are incorporated in the disclosure by reference.

### TECHNICAL FIELD

The present disclosure relates to the field of network technology, and in particular to methods and devices for recording and transmitting courseware, an interactive white board and storage medium.

### BACKGROUND

At present, in the field of recording and transmitting of courses for remote teaching or network conferences, the screen content is commonly captured by a camera equipment and the audio content is captured by an audio equipment, thus achieving the recording of the content of the courses for remote teaching or network conferences. Further, to facilitate the playback of the course content or the conference content, the captured video and audio are generally stored to the server.

However, because the data size of files recorded in video format is usually very large, the uploading of video files may consume a lot of transmission bandwidth, and the storage of video files may also occupy a large amount of storage space, resulting in higher costs for recording and transmitting of these files.

### SUMMARY

The present disclosure provides a method and device for recording and transmitting courseware, an interactive white board and a storage medium.

The present disclosure provides a courseware recording method, comprising:
responsive to receiving an instruction for triggering the recording of a courseware, starting a courseware recording function;
recording a page identifier of the courseware, user audio data and user behavior data in the recording process;
responsive to receiving an instruction for triggering the closing of the courseware recording function, mapping time points of recording the recorded page identifier of the courseware, user audio data and user behavior data to a timeline for the recording process, and based on the timeline, storing the courseware, the user audio data and the user behavior data in relation to each other, to generate a recording file of the recording process; wherein
the courseware page shows a movable element; the user behavior data includes a user instruction, start time and duration of the user instruction, an identifier of an element pointed to by the user instruction, and data stream generated in the acting process caused by the user instruction; the user instruction includes a drag instruction for triggering a motion of the movable element;
if the drag instruction is received in the recording process, the recorded data stream includes an initial position parameter and an end position parameter of a motion trajectory generated on the courseware page by the movable element in response to the drag instruction.

The present disclosure further provides a courseware playing method, comprising:
responsive to receiving an instruction for triggering the playing of a recording file, acquiring a corresponding courseware, user audio data, and user behavior data from the recording file, which is currently designated to be played, wherein the recording file is recorded by the courseware recording method;
according to a timeline of the recording file, demonstrating the courseware, playing the user audio data, and executing the user behavior data, to synchronously reproduce the courseware, the user audio data, and a user operation corresponding to the user behavior data in relation to each other.

The present disclosure further provides a courseware recording device, comprising:
a triggering module, configured to, responsive to receiving an instruction for triggering the recording of a courseware, start a courseware recording function;
a recording module, configured to record a page identifier of the courseware, user audio data and user behavior data in the recording process;
a processing module, configured to, responsive to receiving an instruction for triggering the closing of the courseware recording function, map time of recording the recorded page identifier of the courseware, user audio data and user behavior data to the timeline of the recording process, and based on the timeline, store the courseware, the user audio data and the user behavior data in relation to each other, to generate a recording file of the recording process; wherein
the courseware page shows a movable element; the user behavior data includes a user instruction, start time and duration of the user instruction, an identifier of an element pointed to by the user instruction, and data stream generated in the acting process caused by the user instruction; the user instruction includes a drag instruction for triggering a motion of the movable element;
if the drag instruction is received in the recording process, the recorded data stream includes an initial position parameter and an end position parameter of a motion trajectory generated on the courseware page by the movable element in response to the drag instruction.

The present disclosure further provides a courseware playing device, comprising:
an acquiring module, configured to, responsive to receiving an instruction for triggering the playing of a recording file, acquire a corresponding courseware, user audio data, and user behavior data from the recording file, which is currently designated to be played, wherein the recording file is recorded by the courseware recording method;
a reproducing module, configured to, according to a timeline of the recording file, demonstrating the courseware, playing the user audio data, and executing the user behavior data, to synchronously reproduce the courseware, the user audio data, and a user operation corresponding to the user behavior data in association with each other.

The present disclosure further provides an interactive white board, comprising:
a processor;
a memory for storing a computer program executable by the processor;
a voice capturing equipment;
a display; wherein
when the processor executes the program, the steps of the courseware playing device are implemented; in the process of implementing the steps of the courseware playing method, the processor controls the voice capturing equipment to capture the user audio data and the display to display a demonstration process of the courseware.

The present disclosure further provides an interactive white board, comprising:
a processor;
a memory for storing a computer program executable by the processor;
a voice playing equipment;
a display; wherein
when the processor executes the program, the steps of the courseware playing method are implemented; in the process of implementing the steps of the courseware playing method, the processor controls the voice playing equipment to play the user audio data and the display to display a demonstration process of the courseware.

The present disclosure further provides a computer-readable storage medium, which stores a computer program, wherein when the program is executed by a processor, the steps of the courseware recording method and/or the courseware playing method are performed.

### The present disclosure

In the process of recording the courseware , the recording of the demonstrating process of courseware is divided into three parts: the page identifier of the courseware, the user audio data, and the user behavior data, the three parts are recorded based on the time axis, and the changes of the courseware due to user operations, for example, the motion trajectory generated by dragging the movable element of the courseware by the user, are recorded and saved in the form of a data stream, wherein only the initial position parameter and the end position parameter of the movable element are recorded to realize the recording of the motion trajectory of the movable element. Compared with the manner of recording the demonstrating process of courseware and the motion trajectory of the movable element through the video stream in the related technology, the data volume generated by the recording of the courseware and the transmission traffic generated when the recorded files are shared are greatly reduced, thereby effectively reducing the cost of recording and transmitting the courseware for course education or network conferences.

In the process of playing the courseware, by demonstrating the courseware, playing user audio data, and executing user behavior data based on the time axis, the courseware, the user audio data, and the user operation corresponding to the user behavior data are synchronously reproduced in association with each other. Compared with the manner of reproducing the demonstrating process of courseware by saving the video stream, parsing the video stream, and playing the video in the related technology, the memory occupation of recording files and the volume of data analysis are reduced, which is conducive to improving the playing efficiency of the courseware.

### BRIEF DESCRIPTION OF THE DRAWINGS

Fig. 1 is a flowchart showing a courseware recording method according to an embodiment of the present disclosure,
Fig. 2 is a schematic diagram showing a linear motion trajectory of a movable element according to an embodiment of the present disclosure,
Fig. 3 is a schematic diagram of acquiring a target position point of a motion trajectory according to an embodiment of the present disclosure,
Fig. 4 is a flowchart showing a courseware playing method according to an embodiment of the present disclosure,
Fig. 5 is a structural block diagram showing a courseware recording device according to an embodiment of the present disclosure,
Fig. 6 is a structural block diagram showing a courseware playing device according to an embodiment of the present disclosure.

### DESCRIPTION OF THE PREFERRED EMBODIMENTS

Embodiments may be described in detail herein, and examples thereof are shown in the accompanying drawings. When the following description refers to the accompanying drawings, unless otherwise indicated, the same numbers in different drawings represent the same or similar elements.

The "a", "said" and "the" in singular form used in the present disclosure and the appended claims are also intended to include plural forms, unless the context clearly indicates other meanings. It should also be understood that the term "and/or" as used in the present disclosure refers to and includes any or all possible combinations of one or more associated listed items.

It should be understood that, although the terms of first, second, third, etc. may be used in the present disclosure to describe various information, the information should not be limited to these terms. These terms are only used to distinguish the same type of information from each other. For example, without departing from the scope of the present disclosure, the first information may also be referred to as second information, and similarly, the second information may also be referred to as first information. Depending on the context, the word "if' as used herein can be interpreted as "while" or "when" or "in response to a certainty".

Based on the perspective of courseware recording, embodiments of the present disclosure provide a courseware recording method, and the courseware recording method can be executed by a courseware recording device, to realize the recording of teaching courseware or conference courseware. The courseware recording device can be implemented using software and/or hardware, and can be composed of two or more physical entities, or can be composed of one physical entity. The courseware recording device may be a component subordinate to a computer, a mobile phone, a tablet PC, a projector, or an interactive white board, or the courseware recording device may be a computer, a mobile phone, a tablet PC, a projector, or an interactive white board.

In one embodiment, an interactive white board or a component subordinate to the interactive white board is taken as an example of the courseware recording device for description. Thereinto, the interactive white board can be an integrated device that controls the content displayed on the display screen through the touch technology and realizes human-computer interaction operation. And the interactive white board can integrate one or more of these functions selected from one group consisting of projectors, electronic whiteboards, screen curtains, loudspeakers, televisions, and video conference terminals.

In an embodiment, the interactive white board can establish a data connection with at least one external device. The external devices may include, but not limited to, mobile phones, notebook computers, USB flash disks, tablet computers, desktop computers, servers, etc. Embodiments do not limit the communication mode of the data connection between the external device and the interactive white board. For example, the communication mode may include, but not limited to USB connection, Internet, Local Area Network, Bluetooth, WIFI, or ZigBee protocol.

Optionally, the interactive white board may be installed with courseware recording application software, the interactive white board may be pre-installed with the courseware recording application software, or responsive to starting the courseware recording function, the courseware recording application software may be downloaded and installed from a third-party device or server. Thereinto, embodiments do not limit the third-party device.

In some embodiments, the courseware recording application software when executed, may acquire user behavior data generated by operating the courseware in the process of using the courseware by the user, and user audio data generated in the process of presenting the courseware by the user, and associate the user behavior data, the user audio data, and the courseware based on the timeline of the recording.

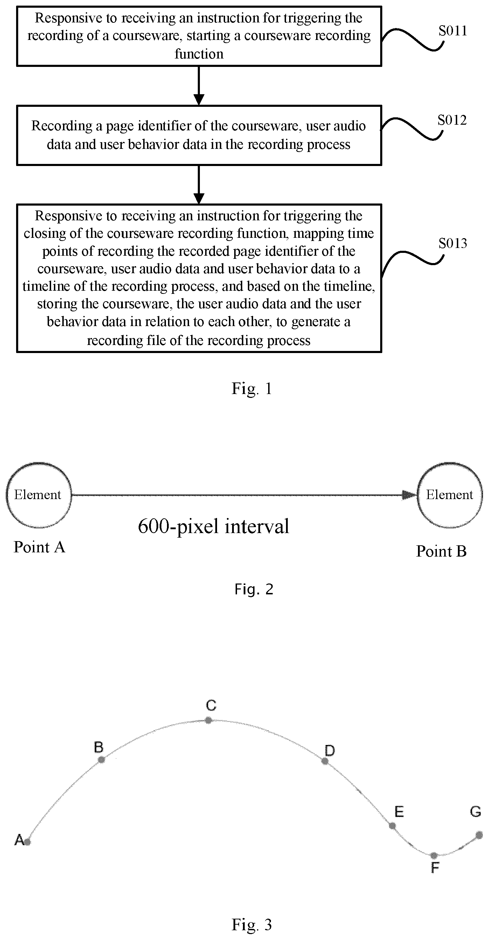

As shown in Fig. 1, Fig. 1 is a flowchart showing a courseware recording method according to an embodiment of the present disclosure. The courseware recording method provided in this embodiment includes:
S011, responsive to receiving an instruction for triggering the recording of a courseware, starting a courseware recording function,
S012, recording a page identifier of the courseware, user audio data and user behavior data in the recording process,
S013, responsive to receiving an instruction for triggering the closing of the courseware recording function, mapping time points of recording the recorded page identifier of the courseware, user audio data and user behavior data to a timeline of the recording process, and based on the timeline, storing the courseware, the user audio data and the user behavior data in relation to each other, to generate a recording file of the recording process, wherein
the courseware page shows a movable element, and the user behavior data includes a user instruction, start time and duration of the user instruction, an identifier of an element pointed to by the user instruction, and data stream generated in the acting process caused by the user instruction, where the user instruction includes a drag instruction for triggering a motion of the movable element. If the drag instruction is received in the recording process, the recorded data stream includes an initial position parameter and an end position parameter of a motion trajectory generated on the courseware page by the movable element in response to the drag instruction.

In the fields of teaching or work, if there is a need to record the demonstrating process of courseware of the teaching or conference to allow students or staff members to review the content of the demonstration, or to share the demonstrating process of courseware with more students or staff members, a courseware recording application software in the interactive white board may be started, and on the user interface of the courseware recording application software, the courseware currently required for demonstration may be selected.

Responsive to selecting the courseware, clicking the recording control arranged in the user interface may generate an instruction for triggering the recording of the courseware to start the courseware recording function. The courseware may be previously imported into the courseware recording application software. For example, the courseware stored in the USB flash disk connected to the interactive white board or the courseware downloaded through the webpage may be stored in a courseware folder of the courseware recording application software. The courseware may also be acquired from a third-party device or server after the courseware recording application software is started, for example, the courseware recording application software automatically recognizes all the courseware stored on the interactive white board and/or all the courseware stored in the third-party device that has established a connection with the interactive white board, or by establishing a connection of the courseware recording application software with cloud storage of the user, the courseware may be acquired from the cloud storage of the user.

The courseware can be PPT or EasiNote courseware.

After the courseware recording function is started, the courseware recording application software may automatically record the page identifier of the courseware, the user audio data, and the user behavior data in the recording process. Thereinto, the page identifier of the courseware may refer to the page number of the courseware. For example, if the courseware is a PPT, when the page currently being demonstrated is the third page of the PPT, the page identifier may be recorded as PPT3. The user audio data may be captured by a voice capturing equipment, and the user audio data captured by the voice capturing equipment is time-continuous data, which can be understood as: the recording time duration of the user audio data is equal to the recording time duration of the recording process, and the voice capturing equipment can be a component subordinate to the interactive white board, or an equipment externally connected with the interactive white board. The user behavior data refers to the data generated when the user operates the content in the courseware, for example, the page turning instruction and the change of the courseware page generated when the user turns the page; for another example, the drag instruction triggered when the user moves the movable element in the courseware, and the position change and motion duration of the movable element. In the process of recording the page identifier of the courseware and the user behavior data, at the same time, the time interval between the time when the page identifier and user behavior data change and the start time of the recording is recorded, so that when the demonstrating process of courseware is subsequently reproduced, the above recorded data can be used to restore the courseware demonstrating process.

When the demonstration is over and the recording function needs to be closed, clicking the end recording control arranged in the current interface of the courseware recording application software may generate an instruction for triggering the closing of the courseware recording function, so as to terminate the current recording. At this time, the courseware recording application software maps the time of recording the recorded page identifier of the courseware, user audio data, and user behavior data to the timeline of the recording process, and based on the timeline, stores the courseware, the user audio data and the user behavior data in relation to each other, to generate a recording file of the recording process. Thus, the demonstrating process of courseware is played back based on the operations according to the timeline. When the time of operation reaches the time points associated with the page identifier of the courseware and/or the user behavior data, the page identifier of the courseware and/or the user behavior data can be read, to control the display screen to display the corresponding content. For example, if the user behavior data records that the user triggers a page turning instruction in the 60th second of the timeline, when the time of operation reaches the 60th second of the timeline, the page of the courseware may be turned and the identifier of the page after being turned is the same as the one recorded at the 60th second.

In an optional embodiment, the user behavior data generated by the same user operation at the same starting time may be recorded in the following form:
the time interval between the start time of the user operation and the start time of the recording, the ID of the element operated by the user, the page ID of the current page of the courseware, the start time of the user operation, the type of user instruction triggered by the user operation, the start time of the recording, the data generated in response to user operations (that is, the data stream generated in the acting process caused by user instructions).

Although the above-mentioned items are expressed in text form, in actual records, the above-mentioned items can be replaced with corresponding program codes and/or data.

In the above, the start time of the user operation can be acquired from the two items of data in the above record: the time interval between the start time of the user operation and the start time of the recording, and the start time of the recording. However, in the data recording process, the system thread may be blocked, causing the data of the time interval between the recorded start time of the user operation and start time of the recording larger. Therefore, if the start time of the user operation is determined only based on the time interval between the start time of the user operation and the start time of the recording, a serious deviation is likely to occur, which may cause the acquired start time of the user operation to be delayed from the actual start time. Therefore, to solve this problem, by further recording this item of data: the start time of the user operation, that is, directly recording the start time of the user operation, not only can the start time of the user operation be corrected, but also can the start time of the user operation corresponding to the above-mentioned user behavior data be determined more quickly, further ensuring the accuracy of the recorded start time of the user operation.

It can be seen from the above that the user behavior data records user operation behavior and data changes caused by the user operation behavior during a certain time period in the recording process, including behavior type (that can be understood as user instruction type), page ID of the courseware, start time of the behavior, start time of the recording, behavior duration, change data due to user behavior, etc. The process of capturing user behavior data and page identifiers employs the timeline as the principal line, and time points on the timeline can be associated with a series of data. In this example, the page identifier is regarded as a part of the user behavior data and recorded.

Optionally, the recording file may be a file in JSON text format, or may be a file in other text formats.

In the courseware recording process, the user can drag at least one movable element in the courseware, to move the movable element on the current page of the courseware. When the user drags a movable element, a drag instruction is triggered. At this time, in this embodiment, in order to reduce the storage of motion data of the movable element, it may record only the initial position parameter and the end position parameter of the motion trajectory generated by the dragged element on the courseware page.

Optionally, the movable element may be an element subordinate to the courseware, or an element provided by the courseware recording application software. Thereinto, after acquiring the courseware, the courseware recording application software can recognize each element on each page of the courseware. For example, by recognizing connected domains or by recognizing image, each element can be recognized, so that each element can be separated from the original page and become an individual that can be divorced from the original page and can be moved by the user. The movable element includes at least one of the following: text, graph, letter, picture, mind map, animation, and control. Thereinto, when the movable element are texts, the texts can be recognized one by one with phrases as units by means of phrase recognition, and the texts that cannot form a phrase with other texts can be individually recognized. In addition, in addition to movable elements, there may also be fixed elements that cannot be moved by the user. The fixed elements may also include at least one of the following: text, graph, letter, picture, mind map, animation, and control.

Optionally, the initial position parameter and the end position parameter may be pixel coordinate positions calculated and obtained based on the display screen resolution or the courseware page.

For linear-type motion trajectories, there is no problem to restore the motion trajectory by only recording the initial position parameter and the end position parameter, and it is also possible to reduce the recorded data and prevent the recorded data from causing errors in the process of reproducing the motion trajectory. The following is an example to illustrate the reason:

As shown in Fig. 2, Fig. 2 is a schematic diagram showing a linear motion trajectory of a movable element according to an embodiment of the present disclosure. It is assumed that there is a 600-pixel interval between a point A and a point B shown in Fig. 2. If each position information is recorded in this linear motion, information of 600 position points generally needs to be recorded. However, since the difference between every two adjacent position points may be less than 1 ms. Therefore, the program may not only generate too much recorded data, but also fail to recognize the time gap between two adjacent points, which may lead to errors in the reproduction of the motion trajectory. Therefore, in order to avoid the above-mentioned problems, this embodiment optimizes the data capture scheme of the motion trajectory. Since there is a linear displacement from the point A to the point B, it is only necessary to record the position parameters of the point A and the point B, and then in the process of reproducing the motion trajectory, automatically generate the position points between the point A and the point B by an interpolation algorithm. The concrete process of reproducing the linear motion trajectory includes:

Based on the above example, it is assumed that the time consumption required for the movable element to move from the point A to the point B is 800 ms. The following situation is taken as an example: the refresh rate of the display screen is 60 frames/s (that is, 60 fps), and the motion of the movable element from the point A to the point B is a uniform motion. It can be seen that it takes about 16 ms for the display screen to play one frame, so that 16 ms/frame can be used as the motion speed of the movable element, and the number of frames required for being played from the point A to the point B can be calculated and obtained as 800÷16=50. The 50 frames include the frame at the initial position of the point A and the frame at the end position of the point B, and the position points of the movable element in the remaining 48 frames can be calculated and obtained based on the position of the point A and/or the position of the point B, through the interpolation algorithm in the way of uniform linear motion, so that the unrecorded position parameters are complemented in the process of reproducing the linear motion trajectory, and a smooth motion process is presented.

It can be seen from the above that the embodiment of the present disclosure replaces the video stream with text data (data stream), which greatly reduces storage and transmission costs. For example, within 60 minutes, the size of the user behavior data captured by the courseware recording method provided by the present disclosure generally does not exceed 5 M, while the video data acquired by recording courseware through video streams may be as high as 600 M. The difference between the two is clear. In addition, in terms of transmission, the present disclosure transmits text data, which can reduce the requirements for network quality, and because it only takes a few seconds to read text data, and there may be no stalls in the middle, it is also facilitate the client to quickly acquire the recording file. Furthermore, since the video recording mode is not used, in the process of realizing the recording of the recording file, it is no longer necessary to use a high-definition camera, which is beneficial to reducing hardware costs.

Thus, in the process of recording the courseware, the recording of the demonstrating process of courseware is divided into these parts: the page identifier of the courseware, the user audio data and the user behavior data (or the page identifier of the courseware is recorded in the user behavior data), these parts are recorded based on the timeline, and the changes of the courseware due to user operations, such as the motion trajectory generated by dragging the movable element of the courseware by the user, are recorded and stored in the form of a data stream, wherein only the initial position parameter and the end position parameter of the movable element are recorded to realize the recording of the motion trajectory of the movable element. Compared with the method of recording the demonstrating process of courseware and the motion trajectory of the movable element through the video stream in the related technology, the data volume generated by the recording of the courseware and the transmission traffic generated when the recording files are shared are greatly reduced, thereby effectively reducing the cost of recording and transmitting the courseware for course education or network conferences.

However, in the process of dragging the movable element by the user, the motion trajectory generated by the dragging of the movable element is often not linear, and the motion of the movable element is not uniform. Although the linear motion trajectory can also be restored based on the initial position and the end position of the movable element, this motion trajectory is clearly inconsistent with the actual motion trajectory in the courseware demonstrating process, which affects the user experience to a certain extent. Therefore, in order to improve the consistency between the reproduced motion trajectory and the actual motion trajectory, and to improve the user experience and the reproduction effect of the motion trajectory, it is necessary to optimize the recording of the data of the motion trajectory. In one embodiment, the courseware recording method further include:
S021, determining whether the motion trajectory is a linear motion trajectory,
S022, when the motion trajectory is a non-linear motion trajectory, the recorded data stream further including several parameters of target positions between the initial position and the end position of the motion trajectory, wherein
among parameters of every three consecutive target positions, the slope of a straight line where position points indicated by parameters of one group of two adjacent target positions are located and the slope of a straight line where position points indicated by parameters of the other group of two adjacent target positions are located satisfy a preset condition.

In the recording process, after the drag instruction is triggered, at least 3 position parameters in a certain segment in the motion process of the movable element can be captured first, to determine whether the straight line where the position points indicated by the position parameters is located is in a straight line. If it is not, it can be considered that the motion trajectory is not a linear motion trajectory, otherwise the motion trajectory is considered as a linear motion trajectory. However, the motion generated by dragging the movable element by the user is rarely a linear motion, so that in this case, in another embodiment, the step S021 can be omitted, that is, as long as the drag instruction is triggered, the recorded position parameters of the motion trajectory of the movable element include not only the initial position parameter and the end position parameter, but also several parameters of target positions between the initial position and the end position. In addition, in another embodiment, in order to meet more requirements by users, a linear drag instruction can be additionally arranged based on the above drag instruction. Then, if the triggered drag instruction is a linear drag instruction, the recorded position parameters of the motion trajectory of the movable element may only include the initial position parameter and the end position parameter.

The preset condition refers to, among parameters of every three consecutive target positions, the absolute value of the difference between the slope of a straight line where position points indicated by parameters of one group of two adjacent target positions are located and the slope of a straight line where position points indicated by parameters of the other group of two adjacent target positions are located is greater than a preset threshold value. Thereinto, the preset threshold value can be acquired based on experience or experiment without limitation in this embodiment. Thereinto, when calculating the slope of every two adjacent position points, it is not necessary to connect the two points to form a straight line. The application can directly calculate and obtain the slope of the straight line where the two points are located according to the position parameters of the two adjacent position points.

In one embodiment, the process of acquiring the several parameters of target positions includes:
S301, acquiring position parameters corresponding to several position points on the motion trajectory at a preset time interval,
S302, based on the preset condition, acquiring the several parameters of target positions from the several position parameters through a filtering algorithm.

Hereinafter, an example may be given to describe the process of acquiring the several parameters of target positions:

As shown in Fig. 3, Fig. 3 is a schematic diagram of acquiring a target position point of a motion trajectory according to an embodiment of the present disclosure. First, the position parameter of each position point on the motion trajectory is recorded, and the initial position parameter (in Fig. 3, the position parameter where the point A is located) and the end position parameter (in Fig. 3, the position parameter where the point G is located) are retained. Then, based on the preset conditions, through the filtering algorithm, two position points B and C after A are selected, wherein the absolute value of the difference between the slope of the straight line where A and B are located and the slope of the straight line where B and C are located is greater than the preset threshold value, indicating that the motion trajectory between A and C has a large change at this time, and cannot be regarded as a linear motion, so the point B needs to be retained. Based on the same principle, the three points D, E, and F can be determined. Therefore, finally, only the position parameters corresponding to the 7 points A, B, C, D, E, F, and G on the motion trajectory are retained, and other position parameters are deleted, to improve the consistency between the reproduced motion trajectory the actual motion trajectory, and at the same time, to reduce the size of recorded data.

In one embodiment, when the motion trajectory is a non-linear motion trajectory, the recorded data stream may further include the motion time between every two adjacent target position parameters, and the motion time is used for indicating the time consumption for the movable element to travel from one target position parameter to another adj acent target position parameter. Therefore, compared with the manner that the preset motion speed is used as the motion speed of the movable element, the actual motion speed of the movable element between every two adjacent points is calculated based on the motion time, and the appropriate number of position parameters can be acquired based on the motion speed, to make it more closely match the actual motion trajectory.

In one embodiment, in order to facilitate the acquisition, storage and sharing of the recording file, after generating the recording file, the recording file may be uploaded to the server, or the recording file may be shared with a third-party device.

In one embodiment, if a screen projecting request is received in the recording process, the courseware, and the page identifier of the courseware, the user audio data and the user behavior data recorded in the recording process can be sent to the requesting end of the screen projecting request, so that the requesting end plays the demonstrating process of courseware according to the received courseware, page identifier of the courseware, user audio data, and user behavior data.

Thereinto, there are one or more requesting ends, which can be concretely arranged according to actual application scenarios without limitation in this embodiment. In addition, the requesting end may include, but is not limited to: mobile phones, notebook computers, USB flash disks, tablet computers, desktop computers, and servers.

Optionally, the interactive white board and/or the requesting end may be installed with screen projection application software. The screen projection application software may be pre-installed on the interactive white board and/or the requesting end, or may be downloaded and installed from a third-party device or server when the interactive white board and/or the requesting terminal starts the screen projection function. Thereinto, this embodiment does not limit the third-party device.

Optionally, the data recorded in the recording process can be sent to the requesting end through the direct or indirect sending manner. In the case of the indirect sending manner, the interactive white board can send the data recorded in the recording process to the requesting end through a relay equipment. The relay equipment may be a wireless screen transmission device, or other equipment with data relay/processing functions. After receiving the data recorded in the recording process, the requesting end converts the data into corresponding content and displays the content.

It should be noted that, since the data recorded in the recording process is acquired based on the resolution of the interactive white board, when the resolution of the display screen of the requesting end is different from that of the display screen of the interactive white board, in order to better display the data on the display screen of the requesting end, the screen projection application software may determine the screen mapping relationship according to the resolution of the display screen of the requesting end and the resolution of the display screen of the interactive white board, and then convert the data according to the screen mapping relationship to obtain the demonstration content. It should be noted that, in this embodiment, the demonstration content displayed by the requesting end and the demonstration content of the recording process are substantially the same, but the resolution may be different.

In one embodiment, in addition to the above-mentioned types of user instructions, the user instructions may further include, but not limited to: writing instructions, handwriting color input instructions, handwriting thickness input instructions, and zooming instructions for zooming elements in the courseware, page turning instructions, playing instructions, pause instructions, stop instructions, fast forward instructions, reverse instructions, etc. Thereinto, each of the above-mentioned instructions can be input through controls arranged on the user interface of the courseware recording application software, or input through the voice control manner, without limitation in this embodiment.

Thereinto, when a writing instruction is received in the recording process, the data recording of the handwriting can be realized based on the above-mentioned data recording method of the motion trajectory, that is, the data stream of the handwriting can include the initial position parameter and the end position parameter of the handwriting, or include the initial position parameter and the end position parameter of the handwriting and several parameters of target positions between the initial position and the end position.

In another embodiment, in order to improve the consistency between the reproduced handwriting and the actual handwriting, the data stream of the handwriting may further include at least one of handwriting color data and handwriting thickness data.

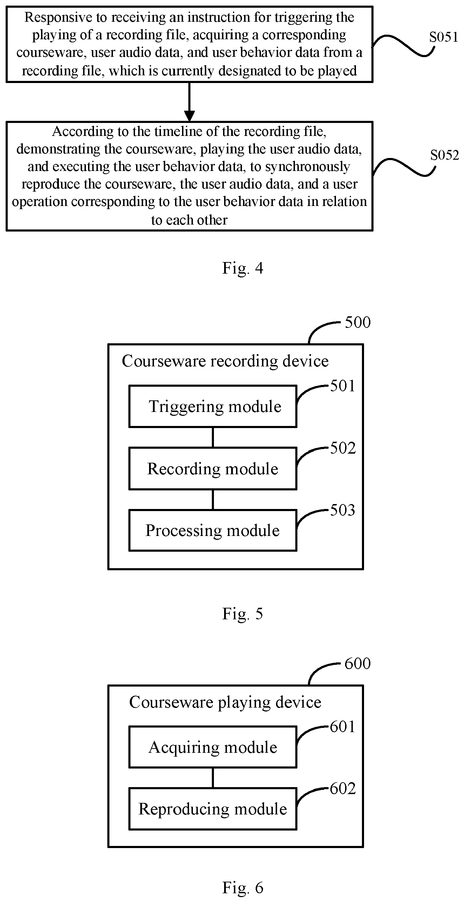

Based on the perspective of playing a recording file recorded by the courseware recording method provided in any of the above-mentioned embodiments, an embodiment of the present disclosure further provides a courseware playing method. As shown in Fig. 4, Fig. 4 is a flowchart showing a courseware playing method according to an embodiment of the present disclosure. The courseware playing method includes:
S051, responsive to receiving an instruction for triggering the playing of a recording file, acquiring a corresponding courseware, user audio data, and user behavior data from the recording file, which is currently designated to be played,
S052, according to the timeline of the recording file, demonstrating the courseware, playing the user audio data, and executing the user behavior data, to synchronously reproduce the courseware, the user audio data, and a user operation corresponding to the user behavior data in relation to each other.

Thereinto, the recording file is recorded by the courseware recording method provided in any one of the above-mentioned embodiments. As for how to, according to the timeline of the recording file, demonstrate the courseware, play the user audio data, and execute the user behavior data, so as to reproduce the demonstrating process of the courseware, one may refer to the above related discussion such as the concrete description of the reproduction process of the linear motion trajectory. Or, the combination with the above-mentioned related discussion and the following discussion may further illustrate the reproduction of the demonstrating process.

Therefore, according to this embodiment of the present disclosure, in the process of playing the courseware, by demonstrating the courseware, playing user audio data, and executing user behavior data based on the timeline, the courseware, the user audio data, and the user operation corresponding to the user behavior data are synchronously reproduced in association with each other. Compared with the manner of reproducing the demonstrating process of courseware by storing the video stream, parsing the video stream, and playing the video in the related technology, the memory occupation of recording files and the volume of data analysis are reduced, further improving the playing efficiency of the courseware.

On one hand, when the motion trajectory is a linear motion trajectory or the data stream of the recorded motion trajectory only includes an initial position parameter and an end position parameter, the process of reproducing the user operation corresponding to the user behavior data includes:
S061, if the currently executed user behavior data is data generated by triggering the drag instruction, determining the movable element pointed to by the drag instruction,
S062, according to the initial position parameter of the movable element, displaying the movable element in a corresponding area on a courseware page in association with the drag instruction,
S063, according to a preset motion speed and the start time and a time duration of the drag instruction, acquiring the position parameter to be acquired between the initial position and the end position of the movable element through an interpolation algorithm,
S064, according to the timeline and all the position parameters, reproducing a motion process of the movable element at the preset motion speed on the courseware page associated with the drag instruction.

Thereinto, the movable element pointed to by the drag instruction can be realized and determined according to the recorded element identifier at the corresponding time. The preset motion speed can be obtained from the above-mentioned related description, that is, 16 ms/frame.

On the other hand, when the motion trajectory is a non-linear motion trajectory, the process of reproducing the user operation corresponding to the user behavior data includes:
S071, if the currently executed user behavior data is data generated by triggering the drag instruction, determining the movable element pointed to by the drag instruction and the motion trajectory of the movable element,
S072, if the motion trajectory of the movable element is a non-linear motion trajectory, according to the initial position parameter of the movable element, displaying the movable element in a corresponding area on a courseware page associated with the drag instruction, wherein the position parameter of the movable element includes an initial position parameter, an end position parameter, and several parameters of target positions between the initial position and the end position,
S073, according to a preset motion speed and the start time and duration of the drag instruction, acquiring the position parameter to be acquired between parameters of every two adjacent positions of the movable element through an interpolation algorithm,
S074, according to the timeline and all the position parameters, reproducing the motion process of the movable element on the courseware page associated with the drag instruction.

Thereinto, the movable element pointed to by the drag instruction can be realized and determined according to the recorded element identifier at the corresponding time. The preset motion speed can be obtained from the above-mentioned related description, that is, 16 ms/frame.

After acquiring the position parameters required for restoring the motion trajectory of the movable element, the preset motion speed can be used as the motion speed of the movable element in the motion process, and with the Bezier curve in the interpolation algorithm, a curve that is gradually generated with the motion of the movable element is fitted based on the acquired position parameters.

However, actually, the motion speed between every two position points is not necessarily the same, and it is not necessarily all equal to the preset motion speed. Therefore, in order to make the motion trajectory reproduced by the movable element more closely match the actual motion trajectory, in one embodiment, when the motion trajectory is a non-linear motion trajectory, the recorded data stream may further include the motion time between every two adjacent target position parameters. The motion time is used to indicate the time consumed for the movable element to move from one target position parameter to another adjacent target position parameter. Based on this, the process of reproducing the user operation corresponding to the user behavior data after further improvement includes:
S081, if the motion trajectory of the movable element is a non-linear motion trajectory, according to the initial position parameter of the movable element, displaying the movable element in a corresponding area on a courseware page in association with the drag instruction,
S082, determining whether the motion time between every two adjacent target position parameters is greater than a preset time consumption,
S083, for two target position parameters whose motion time is greater than the preset time consumption, calculating and obtaining the position parameters to be acquired between the two through the Tween Algorithm,
S084, for two target position parameters whose motion time is less than or equal to the preset time consumption, acquiring the position parameters to be acquired between the two through the interpolation algorithm,
S085, according to the motion time, the distance and the preset motion speed of every two adjacent target position parameters, calculating and obtaining the actual motion speed of the movable element between every two adjacent target position parameters,
S086, according to the timeline and all position parameters, reproducing the motion process of the movable element at the actual motion speed on the courseware page in association with the drag instruction.

The preset time consumption can be acquired based on experiments or experience, for example, the preset time consumption can be set to 160 ms. The Tween Algorithm may be an algorithm for realizing calculation based on the easing formula of ***Quadratic (t^{∧}2)**.* Hereinafter, the application process shown in the steps S082-S086 is described by taking the preset time consumption of 160 ms and the motion trajectory shown in Fig. 3 as an example:

Assuming that the length of the line segment CD is 30 px (which can be understood as the distance between the point C and the point D), the motion time required for the recorded movable element to move from C to D is 48 ms. It can be seen that, if the motion time from C to D is less than the preset time consumption, for the two position points whose motion time is less than 160 ms, the motion between C and D can be considered as a uniform movement, so other position points between C and D can be evenly supplemented by the interpolation algorithm, so that the number of position points after supplementation meets the requirement of 60 fps. Thus, the number of frames that need to be played from C to D can be calculated and obtained as 48÷16=3. Therefore, it is necessary to further supplement two position points between C and D. In this case, the actual motion speed between the point C and the point D can be described as a motion at an average of 10 px per frame, wherein 10px=30px÷(48÷16).

Assuming that the length of the line segment DE is 30 px, the motion time required for the recorded movable element to move from D to E is 480 ms. It can be seen that, if the motion time from D to E is greater than the preset time consumption, for the two position points for which the motion time is greater than 160 ms. In this embodiment, other position points between D and E are calculated and obtained through the Tween Algorithm, so that the number of calculated and obtained position points meets the requirement of 60 fps. Thus, the number of frames that need to be played from D to E can be calculated and obtained as 480÷16=30. Therefore, it may need further supplement 29 position points between D and E. In this case, the actual motion speed between the point D and the point E can be described as a motion at an average of 1 px per frame, wherein 1px=30px÷(48÷16).

It can be seen that, since the motion time are different, although the length of the line segment CD and the line segment DE are the same, the average speeds are different. For two adjacent position points whose motion time is greater than the preset time consumption, the Tween Algorithm can help smoothing the movement effect of the movable elements.

Therefore, in contrast to the manner that the preset motion speed is used as the motion speed of the movable element, in this embodiment, the actual motion speed of the movable element between every two adjacent points is calculated based on the motion time, and an appropriate number of position parameters are acquired based on the motion speed, so as to make the position parameters more closely match the actual motion trajectory, so that the reproduced motion trajectory is characterized with a better smoothness.

In the demonstrating process of reproducing the courseware, the playing of the user audio data and the reproduction of the user behavior data are relatively independent, which can be understood as: when playing a demonstration process of the courseware according to the recording file, the user audio data should be played at the time of the beginning of the playing until the end of the playing. Because the playing duration of the user audio data is equal to the duration of the timeline of the recording file, and the user audio data and the user behavior data are independent of each other, which can be stored separately. Therefore, as long as the user audio data is played at the beginning of playing, the audio corresponding to the user audio data may eventually be played automatically as time passes. In this process, it is only necessary to execute the user behavior data based on the timeline, so that the courseware responds to the user behavior data, produces corresponding changes, and displays the corresponding content.

Corresponding to the above-mentioned embodiment of the courseware recording method, an embodiment of the present disclosure further provides a courseware recording device, and the courseware recording device can be applied to computers, mobile phones, tablet computers, projectors, or interactive white boards. As shown in Fig. 5, Fig. 5 is a structural block diagram showing a courseware recording device according to an embodiment of the present disclosure. The courseware recording device 500 includes:
a triggering module 501, configured to, responsive to receiving an instruction for triggering the recording of a courseware, start a courseware recording function,
a recording module 502, configured to record a page identifier of the courseware, user audio data and user behavior data in the recording process,
a processing module 503, configured to, responsive to receiving an instruction for triggering the closing of the courseware recording function, map time of recording the recorded page identifier of the courseware, user audio data and user behavior data to the timeline of the recording process, and based on the timeline, store the courseware, the user audio data and the user behavior data in relation to each other, so as to generate a recording file of the recording process, wherein
the courseware page shows a movable element, the user behavior data includes a user instruction, start time and duration of the user instruction, an identifier of an element pointed to by the user instruction, and data stream generated in the acting process of the user instruction, the user instruction includes a drag instruction for triggering a motion of the movable element,
if the drag instruction is received in the recording process, the recorded data stream includes an initial position parameter and an end position parameter of a motion trajectory generated on the courseware page by the movable element in response to the drag instruction.

In one embodiment, the courseware recording device 500 further includes:
a determining module, configured to determine whether the motion trajectory is a linear motion trajectory,
the recording module 502 further configured to, if the motion trajectory is a non-linear motion trajectory, the recorded data stream further includes several parameters of target positions between the initial position and the end position of the motion trajectory, wherein
among parameters of every three consecutive target positions, the slope of a straight line where position points indicated by parameters of one group of two adjacent target positions are located and the slope of a straight line where position points indicated by parameters of the other group of two adjacent target positions are located satisfy a preset condition.

In one embodiment, the recording module 502 may include:
an acquiring module, configured to acquire position parameters corresponding to several position points on the motion trajectory at a preset time interval, and based on the preset condition, acquire the several parameters of target positions from the several position parameters through the filtering algorithm.

In one embodiment, the courseware recording device 500 further includes:
a sending module, configured to, responsive to receiving a screen projection request in the recording process, send the courseware, and the page identifier of the courseware, user audio data, and user behavior data recorded in the screen projection process to a requesting end of the screen projection request, to cause the requesting end to play a demonstration process of the courseware according to the received courseware, page identifier of the courseware, user audio data and user behavior data.

In one embodiment, the sending module further configured to, responsive to generating a recording file, upload the recording file to a server.
In one embodiment, the user instruction further includes a writing instruction. The recording module 502 further configured to, if the writing instruction is received in the recording process, the recorded data stream includes the initial position parameter and the end position parameter of a handwriting.

In one embodiment, the data stream of the handwriting recorded by the recording module 502 further includes at least one of handwriting color data and handwriting thickness data.

In one embodiment, the movable element includes at least one of the following: text, number, letter, graph, image, mind map, animation, and control.

Corresponding to the above-mentioned embodiment of the courseware playing method, the present disclosure further provides a courseware playing device, and the courseware playing device can be applied to computers, mobile phones, tablet computers, projectors, or interactive white boards. As shown in Fig. 6, Fig. 6 is a structural block diagram showing a courseware playing device according to an embodiment of the present disclosure. The courseware playing device 600 includes:
an acquiring module 601, configured to, responsive to receiving an instruction for triggering the playing of a recording file, acquire a corresponding courseware, user audio data, and user behavior data from the recording file, which is currently designated to be played, wherein the recording file is recorded by the courseware recording method,
a reproducing module 602, configured to, according to the timeline of the recording file, demonstrate the courseware, play the user audio data, and execute the user behavior data, so as to synchronously reproduce the courseware, the user audio data, and a user operation corresponding to the user behavior data in association with each other.

In one embodiment, the reproducing module 602 includes:
a first determining unit, configured to, if the currently executed user behavior data is data generated by triggering the drag instruction, determine the movable element pointed to by the drag instruction,
a first displaying unit, configured to, according to the initial position parameter of the movable element, display the movable element in a corresponding area on a courseware page in association with the drag instruction,
a first acquiring unit, configured to, according to a preset motion speed and the start time and a time duration of the drag instruction, acquire the position parameter to be acquired between the initial position and the end position of the movable element through the interpolation algorithm,
a first reproducing unit, configured to, according to the timeline and all the position parameters, reproduce a motion process of the movable element at the preset motion speed on the courseware page in association with the drag instruction.

In one embodiment, the reproducing module 602 can further include:
a second determining unit, configured to, if the currently executed user behavior data is data generated by triggering the drag instruction, determine the movable element pointed to by the drag instruction and the motion trajectory of the movable element,
a second displaying unit, configured to, if the motion trajectory of the movable element is a non-linear motion trajectory, according to the initial position parameter of the movable element, display the movable element in a corresponding area on a courseware page in association with the drag instruction, wherein the position parameter of the movable element include an initial position parameter, an end position parameter, and several parameters of target positions between the initial position and the end position,
a second acquiring unit, configured to, according to a preset motion speed and the start time and duration of the drag instruction, acquire the position parameter to be acquired between parameters of every two adjacent positions of the movable element through the interpolation algorithm,
a second reproducing unit, configured to, according to the timeline and all the position parameters, reproduce the motion process of the movable element on the courseware page in association with the drag instruction.

In another embodiment, the second acquiring unit and the second reproducing unit of the reproducing module 602 may be improved, and the improved reproducing module 602 includes:
a third determining unit, configured to, if the currently executed user behavior data is data generated by triggering the drag instruction, determine the movable element pointed to by the drag instruction and the motion trajectory of the movable element,
a third displaying unit, configured to, if the motion trajectory of the movable element is a non-linear motion trajectory, according to the initial position parameter of the movable element, display the movable element in a corresponding area on the courseware page associated with the drag instruction,
a judging unit, configured to judge whether the motion time between every two adjacent target position parameters is greater than a preset time,
a third acquiring unit, configured to calculate and obtain the position parameters to be acquired between two target position parameters for which the motion time is greater than the preset time consumption through Tween Algorithm,
a fourth acquiring unit, configured to, acquire the position parameters to be acquired between two target position parameters for which the motion time is less than or equal to the preset time consumption through the interpolation algorithm,
a calculating unit, configured to, according to the motion time, the distance and the preset motion speed of every two adjacent target position parameters, calculate and obtain the actual motion speed of the movable element between every two adjacent target position parameters,
a third reproducing unit, configured to, according to the timeline and all position parameters, reproduce the motion process of the movable element at the actual motion speed on the courseware page associated with the drag instruction.

For the implementation process of the functions and roles of each unit in the above-mentioned device, reference is made to the implementation process of the corresponding steps in the above-mentioned method for details, which may not be repeated herein.

For the device embodiments, since the embodiments basically correspond to the method embodiments, the relevant parts can refer to the parts of the description of the method embodiments. The device embodiments described above are merely illustrative, wherein the units described as separate components may or may not be physically separated, and the components displayed as units may or may not be physical units.

Corresponding to the above-mentioned embodiments of the courseware recording method, an embodiment of the present disclosure further provides an interactive white board, including:
a processor,
a memory for storing a computer program executable by the processor,
a voice capturing equipment,
a display, wherein
when the processor executes the program, the steps of the courseware recording method are implemented. In the process of implementing the steps of the courseware recording method, the processor controls the voice capturing equipment to capture the user audio data and the display to display a demonstration process of the courseware.

Corresponding to the above-mentioned embodiments of the courseware recording method, an embodiment of the present disclosure further provides an interactive white board, including:
a processor,
a memory for storing a computer program executable by the processor,
a voice playing equipment,
a display, wherein
when the processor executes the program, the steps of the courseware playing method are implemented. In the process of implementing the steps of the courseware playing method, the processor controls the voice playing equipment to play the user audio data and the display to display a demonstration process of the courseware.

In another embodiment, the present disclosure further provides an interactive white board which can not only implement the courseware recording method but also implement the courseware playing method, including:
a processor,
a memory for storing a computer program executable by the processor,
a voice capturing equipment,
a voice playing equipment,
a display, wherein
when the processor executes the program, the steps of the courseware recording method or the courseware playing method are implemented. In the process of implementing the steps of the courseware recording method, the processor controls the voice capturing equipment to capture the user audio data and the display to display a demonstration process of the courseware. In the process of implementing the steps of the courseware playing method, the processor controls the voice playing equipment to play the user audio data and the display to display the demonstration process of the courseware.

Corresponding to any one of the above-mentioned methods, the present disclosure further provides a computer-readable storage medium, on which a computer program is stored, wherein when a program is executed by a processor, the steps of the courseware recording method or the courseware playing method in any one of the above-mentioned embodiments are implemented.

The present disclosure may adopt the form of a computer program product implemented on one or more storage media containing program codes (including but not limited to disk storage, CD-ROM, optical storage, etc.). Computer-readable storage media include permanent and non-permanent, removable and non-removable media, and information storage can be achieved by any method or technology. The information can be computer-readable instructions, data structures, program modules, or other data. Examples of computer-readable storage media include, but are not limited to: phase change memory (PRAM), static random access memory (SRAM), dynamic random access memory (DRAM), other types of random access memory (RAM), read-only memory (ROM), electrically erasable programmable read-only memory (EEPROM), flash memory or other memories, compact disc read-only memory (CD-ROM), digital versatile disc (DVD) or other optical storage, magnetic cassette tape, magnetic disk storage or other magnetic storage devices or any other non-transmission media which can be used to store information capable of being accessed by computing devices.

## Claims

1. A method for recording courseware, the method comprising:
responsive to receiving an instruction for triggering a recording process of a courseware, starting a courseware recording function;
recording a page identifier of the courseware, user audio data and user behavior data in the recording process;
responsive to receiving an instruction for triggering the closing of the courseware recording function, mapping time points of recording the recorded page identifier of the courseware, user audio data and user behavior data to a timeline of the recording process, and based on the timeline, storing the courseware, the user audio data and the user behavior data in relation to each other, to generate a recording file of the recording process; wherein
the courseware page shows a movable element; the user behavior data includes a user instruction, a start time and a time duration of the user instruction, an identifier of an element pointed to by the user instruction, and data stream generated in the acting process caused by the user instruction; the user instruction includes a drag instruction for triggering a motion of the movable element;
if the drag instruction is received in the recording process, the recorded data stream includes an initial position parameter and an end position parameter of a motion trajectory generated on the courseware page by the movable element in response to the drag instruction.

2. The method according to claim 1, further comprising:
determining whether the motion trajectory is a linear motion trajectory;
responsive to determining that the motion trajectory is a non-linear motion trajectory, the recorded data stream further including several parameters of target positions between the initial position and the end position of the motion trajectory; wherein
among parameters of every three consecutive target positions, a slope of a straight line where position points indicated by parameters of one group of two adjacent target positions are located and the slope of a straight line where position points indicated by parameters of the other group of two adjacent target positions are located satisfy a preset condition.

3. The method according to claim 2, wherein the process of acquiring the several parameters of target positions includes:
acquiring position parameters corresponding to several position points on the motion trajectory at a preset time interval;
based on the preset condition, acquiring the several parameters of target positions from the several position parameters through a filtering algorithm.

4. The method according to claim 1, further comprising:
responsive to receiving a screen projection request in the recording process, sending the courseware, and the page identifier of the courseware, user audio data, and user behavior data recorded in the screen projection process to a requesting end of the screen projection request, so as to cause the requesting end to play a demonstration process of the courseware according to the received courseware, page identifier of the courseware, user audio data and user behavior data.

5. The method according to claim 1, wherein after generating the recording file, the method further comprises:
uploading the recording file to a server.

6. The method according to claim 1, wherein the user instruction further includes a writing instruction, and the method further includes:
responsive to receiving the writing instruction in the recording process, storing, in the recorded data stream, the initial position parameter and the end position parameter of a handwriting.

7. The method according to claim 6, wherein if the writing instruction is received in the recording process, the recorded data stream further includes at least one of handwriting color data and handwriting thickness data.

8. The method according to claim 1, wherein the movable element includes at least one of the following: text, number, letter, graph, image, mind map, or animation.

9. A method for playing a courseware, comprising:
responsive to receiving an instruction for triggering the playing of a recording file, acquiring a corresponding courseware, user audio data, and user behavior data from the recording file which is currently designated to be played, wherein the recording file is a recording file recorded by a method claimed in any one of claims 1-8;
according to a timeline of the recording file, demonstrating the courseware, playing the user audio data, and executing the user behavior data, to synchronously reproduce the courseware, the user audio data, and a user operation corresponding to the user behavior data associated with each other.

10. The method according to claim 9, wherein reproducing the user operation corresponding to the user behavior data includes:
if the currently executed user behavior data is data generated by triggering a drag instruction, determining a movable element pointed to by the drag instruction;
according to an initial position parameter of the movable element, displaying the movable element in a corresponding area on a courseware page associated with the drag instruction;
according to a preset motion speed and start time and time duration of the drag instruction, acquiring the position parameters to be acquired between the initial position and the end position of the movable element through an interpolation algorithm;
according to the timeline and all the position parameters, reproducing a motion process of the movable element at the preset motion speed on the courseware page associated with the drag instruction.

11. The method according to claim 9, wherein the process of reproducing the user operation corresponding to the user behavior data includes:
if the currently executed user behavior data is data generated by triggering a drag instruction, determining a movable element pointed to by the drag instruction and a motion trajectory of the movable element;
if the motion trajectory of the movable element is a non-linear motion trajectory, according to an initial position parameter of the movable element, displaying the movable element in a corresponding area on a courseware page in association with the drag instruction, wherein the position parameter of the movable element includes the initial position parameter, the end position parameter, and several parameters of target positions between the initial position and the end position;
according to a preset motion speed and start time and duration of the drag instruction, acquiring the position parameters to be acquired between parameters of every two adjacent positions of the movable element through an interpolation algorithm;
according to the timeline and all the position parameters, reproducing the motion process of the movable element on the courseware page in association with the drag instruction.

12. A courseware recording device, comprising:
a triggering module, configured to, when an instruction for triggering the recording of a courseware is received, start a courseware recording function;
a recording module, configured to record a page identifier of the courseware, user audio data and user behavior data in the recording process;
a processing module, configured to, when an instruction for triggering the closing of the courseware recording function is received, map time of recording the recorded page identifier of the courseware, user audio data and user behavior data to the time axis of the recording process, and based on the time axis, save the courseware, the user audio data and the user behavior data in association with each other, so as to generate a recording file of the recording process; wherein
the courseware page shows a movable element; the user behavior data includes an user instruction, start time and duration of the user instruction, an identifier of an element pointed to by the user instruction, and data stream generated in the acting process of the user instruction; the user instruction includes a drag instruction for triggering a motion of the movable element;
when the drag instruction is received in the recording process, the recorded data stream includes an initial position parameter and an end position parameter of a motion trajectory generated on the courseware page by the movable element in response to the drag instruction.

13. A courseware playing device, comprising:
an acquiring module, configured to, when an instruction for triggering the playing of a recording file is received, acquire a corresponding courseware, user audio data, and user behavior data from a recording file which is currently designated to be played, wherein the recording file is a recording file recorded by a method claimed in any one of claims 1-8;
a reproducing module, configured to, according to the time axis of the recording file, demonstrate the courseware, play the user audio data, and execute the user behavior data, so as to synchronously reproduce the courseware, the user audio data, and a user operation corresponding to the user behavior data in association with each other.

14. An interactive white board, comprising:
a processor;
a memory for storing a computer program executable by the processor;
a voice capturing equipment;
a display; wherein
when the processor executes the program, the steps of a method claimed in any one of claims 1-8 are implemented; in the process of implementing the steps of the method claimed in any one of claims 1-8, the processor controls the voice collecting equipment to collect the user audio data and the display to display a demonstration process of the courseware.

15. An interactive intelligent tablet, comprising:
a processor;
a memory for storing a computer program executable by the processor;
a voice playing equipment;
a display; wherein
when the processor executes the program, the steps of a method claimed in any one of claims 9-11 are implemented; in the process of implementing the steps of the method claimed in any one of claims 9-11, the processor controls the voice playing equipment to play the user audio data and the display to display a demonstration process of the courseware.

16. A computer-readable storage medium, which stores a computer program, wherein when the program is executed by a processor, the steps of a method claimed in any one of claims 1-8 and/or 9-11 are implemented.
